(19) Europäisches Patentamt
European Patent Office
Office européen des brevets

(11) EP 2 451 113 B1

(12) # EUROPEAN PATENT SPECIFICATION

(45) Date of publication and mention of the grant of the patent:
**14.08.2013 Bulletin 2013/33**

(21) Application number: **10793543.9**

(22) Date of filing: **02.06.2010**

(51) Int Cl.:
***H04L 7/00*** *(2006.01)* ***H04M 11/06*** *(2006.01)*
***H04M 3/30*** *(2006.01)*

(86) International application number:
**PCT/CN2010/073447**

(87) International publication number:
**WO 2011/000248 (06.01.2011 Gazette 2011/01)**

(54) **DATA COLLECTION METHOD, DEVICE AND SYSTEM**

DATENSAMMELVERFAHREN, -VORRICHTUNG UND -SYSTEM

PROCÉDÉ, DISPOSITIF ET SYSTÈME DE COLLECTE DE DONNÉES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **03.07.2009 CN 200910108613**

(43) Date of publication of application:
**09.05.2012 Bulletin 2012/19**

(73) Proprietor: **Huawei Technologies Co., Ltd.**
**Shenzhen, Guangdong 518129 (CN)**

(72) Inventors:
- **LIU, Lihe**
**Shenzhen**
**Guangdong 518129 (CN)**
- **LV, Jie**
**Shenzhen**
**Guangdong 518129 (CN)**

(74) Representative: **Epping - Hermann - Fischer**
**Patentanwaltsgesellschaft mbH**
**Ridlerstraße 55**
**80339 München (DE)**

(56) References cited:
**CN-A- 101 014 136** **JP-A- 5 205 074**
**US-A1- 2005 198 452**

- **"G.gen: G.vdsl: G.ploam: Self-consistent Parameter Group;08AB-059", ITU-T DRAFTS ; STUDY PERIOD 2005-2008, INTERNATIONAL TELECOMMUNICATION UNION, GENEVA ; CH, vol. Study Group 15 ; 4/15, 24 June 2008 (2008-06-24), pages 1-7, XP017531245, [retrieved on 2008-06-24]**
- **MEHDI MOHSENI ET AL: "G.ploam, G.vdsl: Self-consistent Parameter Groups", ITU-T DRAFTS ; STUDY PERIOD 2005-2008, INTERNATIONAL TELECOMMUNICATION UNION, GENEVA ; CH, vol. Study Group 15 ; 4/15, 1 May 2007 (2007-05-01), pages 1-10, XP017527689, [retrieved on 2007-05-22]**
- **"G.gen: G.ploam: G.vdsl: Self-consistent Parameter Groups;BF-083", ITU-T DRAFTS ; STUDY PERIOD 2005-2008, INTERNATIONAL TELECOMMUNICATION UNION, GENEVA ; CH, vol. Study Group 15 ; 4/15, 3 December 2007 (2007-12-03), pages 1-8, XP017532113, [retrieved on 2008-12-19]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to the communication field, and more particularly, to a method, an apparatus, and a system for data acquisition.

### BACKGROUND OF THE INVENTION

The digital subscriber line (Digital Subscriber Line, DSL) technology is a kind of high-speed transmission technology that carries out data transmission through telephone twisted-pair lines, in which the performance of the DSL line is usually improved through dynamic spectrum management DSM (Dynamic Spectrum Management). In order to accomplish the DSM function of a DSL system, characteristics of a crosstalk (crosstalk) channel of the line must be known. The characteristics of the crosstalk channel of the line can be obtained by acquiring subscriber line parameters and making calculations on the parameters. For example, such parameters as a transmit power spectrum density Transmit PSD and a signal to noise ratio SNR of the subscriber line can be acquired by a data acquisition system, and the crosstalk channel of the subscriber line can be calculated according to a formula for crosstalk channel calculation.

However, acquisition of the subscriber line parameters shall not be performed in an arbitrary fashion. In the DSM technology, there is a requirement on the acquired line parameters, and in one process of line parameters acquisition, acquisition of the line parameters is performed in sequence, which has a severe influence on the calculation of the crosstalk channel.

The prior art has the following disadvantages:

In the prior art, the line parameters are acquired in a periodical fashion; i.e., the line parameters are acquired sequentially at a certain time interval. In the process of sequentially acquiring the line parameters of the system, because the time required for the whole acquisition process is relatively long, changes in states of some lines may occur, and the parameters thus acquired cannot meet requirements of the DSM technology.

"gen: G.vdsl: G.ploam: Self-consistent Parameter Group; 08AB-059", ITU_T DRAFTS; STUDY PERIOD 2005-2008, INTERNATIONAL TELECOMMUNICATION UNION, vol. Study Group 15, 2008-06-24, discloses an agreement on a self-cosistent parameter group, and some related proposals.

MEHDI MOHSENI ET AL: "G.ploam, G.vdsl: Self-consistent Parameter Groups", ITU_T DRAFTS; STUDY PERIOD 2005-2008, INTERNATIONAL TELECOMMUNICATION UNION, vol. Study Group 15,2007-05-01, discloses a further justification for a Self-consistent Parameter Groups (SCPG), and shows DSL management examples where the implementation of SCPG improves the capabilities for trouble detection and line monitoring.

"G.gen: G.ploam: G.vdsl: Self-consistent Parameter Groups; BF-083", ITU_T DRAFTS; STUDY PERIOD 2005-2008, INTERNATIONAL TELECOMMUNICATION UNION, vol. Study Group 15, 2007-12-03, discloses a practical solution to ensure self-consistency among these parameters. This solution requires the least amount of change to the hardware.

### SUMMARY OF THE INVENTION

The technical problem to be solved by embodiments of the present invention is to provide a method, an apparatus, and a system for data acquisition to solve the problem that line parameter acquisition in a digital subscriber line system cannot meet requirements of system maintenance.

In order to solve the aforesaid technical problem, the embodiments provided by the present invention are achieved by the following technical solutions.

A method for line parameter acquisition, including:

transmitting, by a data acquisition system, a request message for acquiring line parameters to a central-office end access apparatus, and obtaining a time T1 when the line parameter acquisition is started;

receiving, by the data acquisition system, line parameter information reported by the central-office end access apparatus, and obtaining a time mark T2 of a line; wherein the time mark T2 of the line is a larger one of a time STAMP-OLR parameter when the line is reconfigured online and the time mark when an operation state of the subscriber line changes; and

comparing, by the data acquisition system, the time T1 with the time mark T2 of the line, and saving the received line parameter information if the time T1 is larger than the time mark T2 of the line.

An apparatus for line parameter acquisition, including:

a configuration module, configured to generate a request message, in which the request message carries line information and parameter information thereof to be acquired;
a control module, configured to transmit the request message generated by the configuration module to a central-office end access apparatus, record a time T1 when the central-office end access apparatus starts acquiring line parameters, receive line parameter information reported by the central-office end access apparatus, and obtain a time mark T2 of the line; wherein the time mark T2 of the line is a larger one of a time STAMP-OLR parameter when the line is reconfigured online and the time mark when an operation state of the subscriber line changes; and
a determination module 303, configured to compare the time T1 with the time mark T2 of the line, and save the line parameter information reported by the central-office end access apparatus if T2 is smaller than T1 or re-perform the line parameter acquisition if T2 is no smaller than T1.

A system for line parameter acquisition, including a data acquisition apparatus and a central-office end access apparatus, in which:

the data acquisition apparatus is configured to: generate a request message which carries line information on a line and parameter information thereof to be acquired, transmit the request message to the central-office end access apparatus, and record a time T1 when the central-office end access apparatus starts acquiring line parameters; receive line parameter information reported by the central-office end access apparatus, and obtain a time mark T2 of the line; wherein the time mark T2 of the line is a larger one of a time STAMP-OLR parameter when the line is reconfigured online and the time mark when an operation state of the subscriber line changes; compare the time T1 with the obtained time mark T2 of the line, and save the line parameter information reported by the central-office end access apparatus if T2 is smaller than T1 or re-perform the line parameter acquisition if T2 is no smaller than T1; and
the central-office end access apparatus is configured to: after receiving the request message transmitted by the data acquisition apparatus, perform the parameter acquisition on the line according to information in the request message, and report the parameters acquired to the data acquisition apparatus.

According to the technical solutions provided by the embodiments of the present invention, the problem that line parameter acquisition is inconsistent due to changes in line states during the line parameter acquisition can be avoided by transmitting a request message for acquiring line parameters to a central-office end access apparatus, and obtaining a time T1 when the line parameter acquisition is started; receiving line parameter information reported by the central-office end access apparatus, and obtaining a time mark T2 of the line; and comparing the time T1 with the time mark T2 of the line, and saving the received line parameter information if the time T1 is larger than the time mark T2 of the line. That is, in the DSL system, when it is needed to acquire the line parameters, just acquiring the time mark of the line at the same time and comparing the time mark with certain time information can avoid this problem. Therefore, the problem that the line parameter acquisition in the DSL system cannot meet requirements of system maintenance is solved.

## BRIEF DESCRIPTION OF THE DRAWINGS

FIG 1 is a flowchart of a method according to an embodiment of the present invention;
FIG 2 is a schematic diagram of parameter acquisition according to an embodiment of the present invention;
FIG 3 is a schematic structural diagram of an apparatus according to an embodiment of the present invention; and
FIG 4 is a schematic structural diagram of a system according to an embodiment of the present invention.

## DETAILED DESCRIPTION OF THE EMBODIMENTS

Hereinafter, technical solutions of embodiments of the present invention will be explained clearly and completely in conjunction with the attached drawings in the embodiments of the present invention. Obviously, the embodiments described are only parts but not all of embodiments of the present invention. Other embodiments that can be obtained by those of ordinary skill in the art based on these embodiments of the present invention without making any inventive efforts shall all fall in the protection scope of the present invention.
In the prior art, during the process of sequentially acquiring the line parameters of the system, because the acquisition time is relatively long, changes in states of some lines may occur, and the data thus acquired cannot meet the requirements of the DSM technology on the parameters.

For example, if a crosstalk channel $[H_{12}^{n} \cdots H_{1K}^{n}]^{T}$ of a line 1 is to be calculated according to the following formula using the acquired parameters, then a transmit power spectrum density Transmit PSD of the line and a signal to noise ratio (SNR) of the line need to be acquired and then the crosstalk channel of the line 1 is calculated using the Formula 1.

$$\left[TxPSD_{2}^{n}, \quad \cdots, \quad TxPSD_{K}^{n}\right] \cdot \begin{bmatrix} H_{12}^{n} \\ \vdots \\ H_{1K}^{n} \end{bmatrix} = \frac{H_{11}^{n} \cdot TxPSD_{1}^{n}}{SNR_{1}^{n}} - \sigma_{k}^{n} \quad \text{(Formula 1)}$$

This needs data acquisition several times to form an equation set for solution.

$$\begin{bmatrix} TxPSD_{2}^{n}(t_1), & \cdots, & TxPSD_{K}^{n}(t_1) \\ \vdots & \vdots & \vdots \\ TxPSD_{2}^{n}(t_L), & \cdots, & TxPSD_{2}^{n}(t_L) \end{bmatrix} \cdot \begin{bmatrix} H_{12}^{n} \\ \vdots \\ H_{1K}^{n} \end{bmatrix} = \begin{bmatrix} \frac{H_{11}^{n} \cdot TxPSD_{1}^{n}(t_1)}{SNR_{1}^{n}(t_1)} - \sigma_{1}^{n} \\ \vdots \\ \frac{H_{11}^{n} \cdot TxPSD_{1}^{n}(t_L)}{SNR_{1}^{n}(t_L)} - \sigma_{1}^{n} \end{bmatrix}$$

For each parameter acquisition, parameters needed to be acquired are as shown in the Table 1:

Table1

| Subscriber 1 | | Subscriber *k* | | Subscriber K | |
|---|---|---|---|---|---|
| Transmit PSD | SNR | Transmit PSD | SNR | Transmit PSD | SNR |
| $TxPSD_{1}^{n}(t\ )$ | $SNR_{1}^{n}(t\ )$ | $TxPSD_{k}^{n}(t\ )$ | $SNR_{k}^{n}(t\ )$ | $TxPSD_{K}^{n}(t\ )$ | $SNR_{K}^{n}(t\ )$ |
| Timepoint(1) | Timepoint(2) | Timepoint(*l*) | Timepoint(*l*+1) | Timepoint(L-1) | Timepoint(L) |

In one data acquisition process, the acquisition is performed in sequence for the subscribers. Acquisition of the $SNR_{1}^{n}(t\ )$ at the Timepoint(2) corresponds to that of the $TxPSD_{k}^{n}(t\ )$, $k \in K$ at the Timepoint(2). However, when the $TxPSD_{k}^{n}(t\ )$, $k \in K$ of the subscriber *k* is acquired at the Timepoint(*l*), and if the $TxPSD_{k}^{n}(t\ )$, $k \in K$ at the Timepoint(2) is significantly different from that at the Timepoint(*l*), the $SNR_{1}^{n}(t\ )$ will mismatch with the $TxPSD_{k}^{n}(t\ )$, which has an adverse influence on the calculation of a crosstalk channel.

In view of the problem of the prior art, an embodiment of the present invention provides a method for line parameter acquisition, which specifically includes the following steps:

S101: Transmit a request message for acquiring line parameters to a central-office end access apparatus and obtain a time T1 when the acquisition of the line parameters is started;
S102: Receive line parameter information reported by the central-office end access apparatus and obtain a time mark T2 of a line.
S103: Compare the time T1 with the time mark T2, and save the received line parameter information if the time T1 is larger than the time mark T2.

In this embodiment of the present invention, the line parameters are acquired, and the time mark of a specified line is acquired. Then, the time mark of the line is compared with the time when the acquisition of the line parameters

is started. If the time mark of the line meets a certain condition, it means that the acquisition of the line parameters meets the requirement of the present invention and then the acquired line parameters are saved. Hereinafter, the method of this embodiment of the present invention will be described in detail.

Step 1: A data acquisition system generates a request message which carries line information and parameter information thereof to be acquired, transmits the request message to a central-office end access apparatus, and records a time T1 when the central-office end access apparatus starts acquiring line parameters.

Preferably, the request message generated by the data acquisition system may be of the SNMP (Simple Network Management Protocol, simple network management protocol) format. A database operating system packages subscriber line information for this acquisition and line parameter information to be acquired this time into an SNMP message to generate the request message.

Generally, the data acquisition system is connected to the central-office end access apparatus through a Q interface (see the definition in the standard YD/T761-1995). The data acquisition system transmits the request message of the SNMP format to the central-office end access apparatus through the Q interface and records a time when the request message is transmitted. Preferably, the aforesaid time when the request message is transmitted is recorded as T1 to represent the time when this parameter acquisition is started.

Step 2: After receiving the request message transmitted by the data acquisition system, the central-office end access apparatus acquires parameters of the line according to the information in the request message, and reports the acquired parameters to the data acquisition system.

After receiving the request message, the central-office end access apparatus acquires the specified parameters of the line specified in the message according to contents of the request message. Taking line parameters required for calculating the a crosstalk channel in a DSL system as an example, line parameter information that need to be acquired at least includes information of a transmit power spectrum density and a signal to noise ratio. Of course, contents of the line parameter information are not limited in this embodiment, and line parameter information specified in the DSL standard may be acquired depending on requirements of practical applications. With reference to FIG 2 for the detailed process, for example, this parameter acquisition is performed on n subscriber lines. The central-office end access apparatus starts parameter acquisition from the subscriber line 1 and performs the acquisition sequentially until the parameter acquisition on the subscriber line n is finished, thus completing this data acquisition. The central-office end access apparatus reports the acquired line parameter information to the data acquisition system through the Q interface. Preferably, when reporting the line parameter information to the data acquisition system, the central-office end access apparatus may report the line parameter information to the data acquisition system at a time in a package form.

Step 3: The data acquisition system receives the line parameter information reported by the central-office end access apparatus, and obtains a time mark T2 of the line.

Preferably, after receiving the line parameter information reported by the central-office end access apparatus, the data acquisition system may save the parameter information into a buffer unit. The buffer unit may be a storage unit in the data acquisition system, or may be a part of storage units in a database independent of the data acquisition system.

In which, the time mark T2 of the line is obtained. Preferably, the time mark T2 of the line may be a time STAMP-OLR parameter when the line is reconfigured online or a time mark when an operation state of the subscriber line changes, or may be a larger (i.e., the latest in terms of time) one of the STAMP-OLR parameter and the time mark when the operation state of the subscriber line changes.

Further, the time mark when the operation state of the subscriber line changes is a time mark corresponding to the time mark when the operation state of the subscriber line experiences the latest change with reference to the time T1 when the parameter acquisition is started. The change in the operation state of the subscriber line includes deactivation, activation, power mode switching and so on. When an operation state of a certain subscriber line changes, the central-office end access apparatus obtains the type of the change (deactivation, activation or power mode switching) in the operation state of the subscriber line and the time when the operation state of the subscriber line changes. The STAMP-OLR parameter (with reference to the definition in the standard G997.1) refers to the time mark when the online reconfiguration occurs, for example, a time stamp when the latest online reconfiguration occurs. The central-office end access apparatus obtains the STAMP-OLR parameter by performing acquisition on the specified lines respectively.

Step 4: The data acquisition system compares the time T1 when the acquisition of the line parameters is started with the obtained time mark T2 of the line, and saves the line parameter information reported by the central-office end access apparatus if T2 is smaller than T1 or returns to the step 1 to re-perform the line parameter acquisition if T2 is no smaller than T1.

The data acquisition system obtains the time mark T2 (n) of the specified line n, and determines through comparison whether the time mark (time mark) T2 (n) of the specified line n is smaller than the time T1 when the acquisition of the line parameters is started. If, after comparisons have been made on all the specified lines, all the time marks T2 of the specified lines are smaller than the time T1 when the acquisition of the line parameters is started, it can be determined that the acquired line parameters meet the requirements and the data acquisition system saves the line parameters reported by the central-office end access apparatus. If, during the comparison, the time mark of a certain

specified line is not smaller than (i.e., larger than or equal to) the time mark T1 when the acquisition is started, it can be determined that the acquired line parameters cannot meet the requirements, so the data acquisition system terminates the determination and returns to the step 1 to re-perform the acquisition.

Further, the step 3 and the step 4 that are described above may also be as described herein below.

Step 3: The data acquisition system receives the line parameter information reported by the central-office end access apparatus, records a time T3 when the line parameter acquisition by the central-office end access apparatus is finished, and obtains the time mark T2 of the line. Preferably, T3 represents the time when the reported line parameter information is received.

Step 4: The data acquisition system compares the time T1 when it transmits the request message with the obtained time mark T2 of the line, and saves the line parameter information reported by the central-office end access apparatus if T2 is smaller than T1 or T2 is larger than T3, or returns to the step 1 to re-perform the line parameter acquisition if T2 is no smaller than T1 and no larger than T3.

Further, the process of obtaining the time mark T2 of the line in the step 3 specifically includes the following steps:

> Step 3a: The data acquisition system transmits a command of acquiring a time mark when a line operation state changes to the central-office end access apparatus, and obtains the time mark when the line operation state changes transmitted by the central-office end access apparatus.

When an operation state of a certain subscriber line changes, the central-office end access apparatus transmits the time mark when the line operation state changes to the data acquisition system in real time according to the command from the data acquisition system. The message includes the type of the change (deactivation, activation or power modes) in the operation state of the subscriber line and/or the time when the operation state of the subscriber line changes. The data acquisition system records at least the time mark when the latest change in the operation state occurs (with reference to the time T1 when the parameter acquisition is started, which also applies to the following description). Preferably, the data acquisition system may record the correspondence relationship between the type of the latest change in the line operation state and the time mark when the latest change in the operation state occurs so that the data acquisition system can better know the specific type of the change in the operation state. The type of the change in the operation state described above may also be replaced by other information, for example, information that indicates a change in the operation state.

Step 3b: The data acquisition system transmits a command of acquiring the STAMP-OLR parameter to the central-office end access apparatus, and obtains the STAMP-OLR parameter transmitted by the central-office end access apparatus.

The STAMP-OLR parameter (with reference to the definition in the standard G997.1) refers to the time mark when the latest online reconfiguration occurs (with reference to the time T1 when the parameter acquisition is started, which also applies to the following description), for example, a time stamp when the latest online reconfiguration occurs. The STAMP-OLR parameter is acquired from specified lines respectively by a management entity of the central-office end access apparatus.

Step 3c: The data acquisition system compares the obtained time mark when the line operation state changes with the STAMP-OLR parameter, and determines the larger one (i.e., the later one in terms of time) as T2.

Further, the aforesaid step 1 may further include the following steps. The data acquisition system transmits a command of acquiring the time mark when the line operation state changes. When an operation state of a certain subscriber line changes, the central-office end access apparatus transmits a response message to the data acquisition system in response to the aforesaid command. The response message includes the type of the change (activation or power modes) in the operation state of the subscriber line and the time when the operation state of the subscriber line changes. After receiving the message, the data acquisition system transmits a command of terminating the line parameter acquisition to the central-office end access apparatus through the Q interface, and returns to the step 1; if the data acquisition system does not receive the response message reported by the central-office end access apparatus, then the step 2 is executed.

An embodiment of the present invention further provides an apparatus for line parameter acquisition. As shown in FIG 3, the apparatus includes a configuration module 301, a control module 302, and a determination module 303.

The configuration module 301 is configured to generate a request message, which carries line information and parameter information thereof to be acquired.

The control module 302 is configured to transmit the request message generated by the configuration module 301 to a central-office end access apparatus, and record a time T1 when the central-office end access apparatus starts the acquisition of the line parameters. The request message is used to make the central-office end access apparatus perform the line parameter acquisition according to the information in the request message. The central-office end access apparatus reports the acquired parameters. The central-office end access apparatus reports the acquired line parameter information to the data acquisition system through a Q interface. Preferably, when reporting the line parameter information

to the data acquisition system, the central-office end access apparatus may report the line parameter information to the data acquisition system at a time in a package form. In which, the process of the line parameter acquisition is just the same as what described in the aforesaid method embodiments.

The control module 302 is configured to receive the line parameter information reported by the central-office end access apparatus, and obtain a time mark T2 of the line.

The determination module 303 is configured to compare the time T1 when the acquisition of the line parameters is started and the obtained time mark T2 of the line, and save the line parameter information reported by the central-office end access apparatus if T2 is smaller than T1 or re-perform the line parameter acquisition if T2 is no smaller than T1.

Preferably, after receiving the line parameter information reported by the central-office end access apparatus, the control module 302 may save the parameter information into a buffer module 304. The buffer module 304 may be a storage module in the data acquisition system, or may be a part of storage modules in a database independent of the apparatus for the line parameter acquisition.

In which, the time mark T2 of the line is obtained. Preferably, the time mark T2 of the line may be a time STAMP-OLR parameter when the line is reconfigured online or a time mark when an operation (operation) state of the subscriber line changes, and may also be the larger one (the later one in terms of time) of the STAMP-OLR parameter and the time mark when the operation state of the subscriber line changes.

Further, the time mark when the operation state of the subscriber line changes is a time mark corresponding to the time mark when the operation state of the subscriber line experiences the latest change with reference to the time T1 when the parameter acquisition is started. The change in the operation state of the subscriber line includes deactivation, activation, power mode switching and so on. When an operation state of a certain subscriber line changes, the central-office end access apparatus obtains the type of the change (deactivation, activation or power mode switching) in the operation state of the subscriber line and the time when the operation state of the subscriber line changes. The STAMP-OLR parameter (with reference to the definition in the standard G997.1) refers to the time mark when the online reconfiguration occurs, for example, a time stamp when the latest online reconfiguration occurs. The central-office end access apparatus obtains the STAMP-OLR parameter by performing acquisition on the specified lines respectively.

Preferably, the request message generated by the configuration module 301 may be of the SNMP (Simple Network Management Protocol, simple network management protocol) format. Subscriber line information for this acquisition and line parameter information to be acquired this time are packaged into an SNMP message to generate the request message.

Generally, the control module 302 is connected to the central-office end access apparatus through a Q interface (see the definition in the standard YD/T761-1995). The data acquisition system transmits the request message of the SNMP format to the central-office end access apparatus through the Q interface and records a time when the request message is transmitted. Preferably, the aforesaid time when the request message is transmitted is recorded as T1 to represent the time when this parameter acquisition is started.

In which, the time mark T2 of the line is obtained. Preferably, the time mark T2 of the line may be a time STAMP-OLR parameter when the line is reconfigured online or a time mark when an operation state of the subscriber line changes, and may also be the larger one (the later one in terms of time) of the STAMP-OLR parameter and the time mark when the operation state of the subscriber line changes.

Further, the time mark when an operation state of the subscriber line changes is a time mark corresponding to the time mark when the operation state of the subscriber line experiences the latest change with reference to the time T1 when the parameter acquisition is started. The change in the operation state of the subscriber line includes deactivation, activation, power mode switching and so on. When an operation state of a certain subscriber line changes, the central-office end access apparatus obtains the type of the change (deactivation, activation or power mode switching) in the operation state of the subscriber line and the time when the operation state of the subscriber line changes. The STAMP-OLR parameter (with reference to the definition in the standard G997.1) refers to the time mark when the online reconfiguration occurs, for example, a time stamp when the latest online reconfiguration occurs. The central-office end access apparatus obtains the STAMP-OLR parameter by performing acquisition on the specified lines respectively.

Further, the control module 302 is further configured to receive the line parameter information reported by the central-office end access apparatus, and record a time T3 when the line parameter acquisition by the central-office end access apparatus is finished. Preferably, T3 represents the time when the reported line parameter information is received.

The determination module 303 is further configured to compare the time T1, the time mark T2 of the line, and the time T3 when the line parameter acquisition is finished, and save the line parameter information reported by the central-office end access apparatus if T2 is smaller than T1 or T2 is larger than T3 or re-perform the line parameter acquisition if T2 is no smaller than T1 and no larger than T3.

The process of obtaining the time mark T2 of the line by the control module 302 specifically includes the following steps:

Step 1: The control module transmits a command of acquiring the time mark when the line operation state changes

to the central-office end access apparatus, and obtains the time mark when the line operation state changes transmitted by the central-office end access apparatus.

When an operation state of a certain subscriber line changes, the central-office end access apparatus transmits the time mark when the line operation state changes to the control module 302 in real time according to the command from the data acquisition system. The message includes the type of the change (deactivation, activation or power modes) in the operation state of the subscriber line and/or the time when the operation state of the subscriber line changes. The control module 302 can control a buffer to record at least the time mark when the latest change in the operation state occurs (with reference to the time T1 when the parameter acquisition is started, which also applies to the following description). Preferably, the control module 302 may control the buffer to record the correspondence relationship between the type of the latest change in the line operation state and the time mark when the latest change in the operation state occurs so that the data acquisition system can better know the specific type of the change in the operation state. The type of the change in the operation state described above may also be replaced by other information, for example, information that indicates a change in the operation state.

Step 2: the control module 302 transmits a command of acquiring the STAMP-OLR parameter to the central-office end access apparatus, and obtains the STAMP-OLR parameter transmitted by the central-office end access apparatus.

The STAMP-OLR parameter (with reference to the definition in the standard G997.1) refers to the time mark (with reference to the time T1 when the parameter acquisition is started, which also applies to the following description) when the latest online reconfiguration occurs, for example, a time stamp when the latest online reconfiguration occurs. The STAMP-OLR parameter is acquired from specified lines respectively by a management entity of the central-office end access apparatus.

Step 3: The control module 302 compares the obtained time mark when the line operation state changes with the STAMP-OLR parameter, and determines the larger one (i.e., the later one in terms of time) as T2.

The apparatus further includes a storage module 304 configured to store the line parameter information reported by the central-office end access apparatus.

An embodiment of the present invention further provides a system for line parameter acquisition. A schematic structural diagram of the system is shown in FIG 4. The system includes a data acquisition apparatus 401 and a central-office end access apparatus 402.

The data acquisition apparatus 401 is configured to: generate a request message which carries line information and parameter information thereof to be acquired, transmit the request message to the central-office end access apparatus 402, and record the time T1 when the central-office end access apparatus 402 starts to acquire the line parameters; the data acquisition apparatus 401 receive the line parameter information reported by the central-office end access apparatus 402, and obtain the time mark T2 of the line; and compare the time T1 when it transmits the request message with the obtained time mark T2 of the line, and save the line parameter information reported by the central-office end access apparatus 402 if T2 is smaller than T1 or re-perform the line parameter acquisition if T2 is no smaller than T1.

The central-office end access apparatus 402 is configured to, after receiving the request message transmitted by the data acquisition apparatus 401, perform the parameter acquisition on the line according to information in the request message, and report the acquired parameters to the data acquisition apparatus 401.

Preferably, the request message may be of the SNMP (Simple Network Management Protocol) format. Subscriber line information for this acquisition and line parameter information to be acquired this time are packaged into an SNMP message to generate the request message.

The process of obtaining the time mark T2 of the line by the data acquisition apparatus 401 specifically includes the following steps:

a: The data acquisition apparatus 401 transmits a command of acquiring the time mark when the line operation state changes to the central-office end access apparatus 402, and obtains the time mark when the line operation state changes transmitted by the central-office end access apparatus 402.

When an operation state of a certain subscriber line changes, the central-office end access apparatus 402 transmits the time mark when the line operation state changes to the data acquisition apparatus 401 in real time according to the command from the data acquisition apparatus 401. The message includes the type of the change (activation or power mode switching) in the operation state of the subscriber line and/or the time when the operation state of the subscriber line changes. The data acquisition apparatus 401 records at least the time mark when the latest change in the operation state occurs (with reference to the time T1 when the parameter acquisition is started, which also applies to the following description). Preferably, the data acquisition apparatus 401 may record the correspondence relationship between the type of the latest change in the line operation state and the time mark when the latest change in the operation state occurs so that the data acquisition apparatus 401 can better know the specific type of the change in the operation state. The type of the change in the operation state described above may also be

replaced by other information, for example, information that indicates the change in the operation state.

b: The data acquisition apparatus 401 transmits a command of acquiring the STAMP-OLR parameter to the central-office end access apparatus 402, and obtains the STAMP-OLR parameter transmitted by the central-office end access apparatus 402.

The STAMP-OLR parameter (with reference to the definition in the standard G997.1) refers to the time mark when the latest online reconfiguration occurs (with reference to the time T1 when the parameter acquisition is started, which also applies to the following description), for example, a time stamp when the latest online reconfiguration occurs. The STAMP-OLR parameter is acquired from specified lines respectively by a management entity of the central-office end access apparatus 402.

c: The data acquisition apparatus 401 compares the obtained time mark when the line operation state changes with the STAMP-OLR parameter, and determines the larger one (i.e., the later one in terms of time) as T2.

Further, the data acquisition apparatus 401 is further configured to receive the line parameter information reported by the central-office end access apparatus 402, and record the time T3 when the line parameter acquisition by the central-office end access apparatus is finished. Preferably, T3 represents the time when the reported line parameter information is received.

The data acquisition apparatus 401 is further configured to compare the time T1, the time mark T2 of the line and the time T3 when the line parameter acquisition is finished, and save the line parameter information reported by the central-office end access apparatus if T2 is smaller than T1 or T2 is larger than T3 or re-perform the line parameter acquisition if T2 is no smaller than T1 and no larger than T3.

As will be appreciated by those of ordinary skill in the art, all or a part of the process in the method of the aforesaid embodiment can be implemented by a relevant hardware under instruction of a computer program. The program may be stored in a computer readable storage medium, and when being executed, may include the process of the each method of the embodiment described above. The storage medium may be a magnetic disk, a compact disk, a read-only memory (Read-Only Memory, ROM) or a random access memory (Random Access Memory, RAM).

The method, the apparatus and the system for DSL time synchronization provided by the embodiments of the present invention have been described in detail above. Although the principles and implementations of the present invention have been described with reference to specific embodiments herein, the above description of the embodiments is only intended to facilitate understanding of the present invention. Meanwhile, modifications in terms of the implementations and the application scope may be made by those of ordinary skill in the art based on the above description. Accordingly, the content of the specification shall not be considered as limitations to the present invention.

## Claims

1. A method for line parameter acquisition, comprising:

   transmitting, by a data acquisition system, a request message for acquiring line parameters to a central-office end access apparatus, and obtaining a time T1 when the line parameter acquisition is started;
   receiving, by the data acquisition system, line parameter information reported by the central-office end access apparatus, and obtaining a time mark T2 of a line; wherein the time mark T2 of the line is a larger one of a time STAMP-OLR parameter when the line is reconfigured online and the time mark when an operation state of the subscriber line changes; and
   comparing, by the data acquisition system, the time T1 with the time mark T2 of the line, and saving the received line parameter information if the time T1 is larger than the time mark T2 of the line.

2. The method as claimed in claim 1, wherein the time mark when the operation state of the subscriber line changes is corresponding to the time mark when the operation state of the subscriber line experiences the latest change with reference to the time T1.

3. The method as claimed in claim 1 or 2 , wherein after transmitting the request message for acquiring the line parameters to the central-office end access apparatus and before receiving the line parameter information reported by the central-office end access apparatus, the method further comprises:

   transmitting a command of acquiring the time mark when the operation state of the line changes, and re-performing the line parameter acquisition if a response message reported by the central-office end access apparatus is received; receiving the line parameter information reported by the central-office end access apparatus if no response message reported by the central-office end access apparatus is received.

4. The method as claimed in claim 1 or 2, further comprising:

recording a time T3 when the central-office end access apparatus reports the line parameters, and saving the line parameter information reported by the central-office end access apparatus if T2 is larger than T3.

5. An apparatus for line parameter acquisition, comprising:

a configuration module (301), configured to generate a request message, the request message carries line information and parameter information thereof to be acquired
a control module (302), configured to transmit the request message generated by the configuration module (301) to a central-office end access apparatus, record a time T1 when the central-office end access apparatus starts acquiring line parameters; receive line parameter information reported by the central-office end access apparatus, and obtain a time mark T2 of the line; wherein the time mark T2 of the line is a larger one of a time STAMP-OLR parameter when the line is reconfigured online and the time mark when an operation state of the subscriber line changes; and
a determination module (303), configured to compare the time T1 with the time mark T2 of the line, and save the line parameter information if the time mark T2 is smaller than the time T1 or re-perform the line parameter acquisition if the time mark T2 is no smaller than the time T1.

6. The apparatus as claimed in claim 5, wherein:

the control module (302) is further configured to receive the line parameter information reported by the central-office end access apparatus and record a time T3 when the line parameter acquisition by the central-office end access apparatus is finished; and
the determination module (303) is further configured to compare the time T1, the time mark T2 of the line, and the time T3, and save the line parameter information if T2 is smaller than T1 or T2 is larger than T3, or re-perform the line parameter acquisition if T2 is no smaller than T1 and no larger than T3.

7. The apparatus as claimed in claim 5 or 6, further comprising:

a storage module (304), configured to store the line parameter information reported by the central-office end access apparatus.

8. A system for line parameter acquisition, comprising a data acquisition apparatus (401) and a central-office end access apparatus (402), wherein:

the data acquisition apparatus (401) is configured to: generate a request message which carries line information and parameter information thereof to be acquired, transmit the request message to the central-office end access apparatus (402), and record a time T1 when the central-offce end access apparatus (402) starts acquiring line parameters; receive line parameter information reported by the central-office end access apparatus (402), and obtain a time mark T2 of the line; wherein the time mark T2 of the line is a larger one of a time STAMP-OLR parameter when the line is reconfigured online and the time mark when an operation state of the subscriber line changes; and compare the time T1 when it transmits the request message with the obtained time mark T2 of the line, and save the line parameter information reported by the central-office end access apparatus (402) if the time mark T2 is smaller than the time T1 or re-perform the line parameter acquisition if the time mark T2 is no smaller than the time T1; and
the central-office end access apparatus (402) is configured to: after receiving the request message transmitted by the data acquisition apparatus (401), perform the parameter acquisition on the line according to information in the request message, and report the parameters acquired to the data acquisition apparatus (401).

9. The system as claimed in claim 8, wherein:

the data acquisition apparatus (401) is further configured to: receive the line parameter information reported by the central-office end access apparatus (402), and record a time T3 when the line parameter acquisition by the central-office end access apparatus (402) is finished, compare the time T1, the time mark T2 of the line, and the time T3 when the line parameter acquisition is finished, and save the line parameter information if T2 is smaller than T1 or T2 is larger than T3 or re-perform the line parameter acquisition if T2 is no smaller than T1 and no larger than T3.

## Patentansprüche

1. Verfahren für Leitungsparametererfassung, das Folgendes umfasst:

   Senden durch ein Datenerfassungssystem einer Anforderungsnachricht zum Erfassen von Leitungsparametern an eine Zugangsvorrichtung einer Vermittlungsstellenseite und Erhalten eines Zeitpunkts T1, zu dem die Leitungsparametererfassung begonnen wird;
   Empfangen durch das Datenerfassungssystem von durch die Zugangsvorrichtung der Vermittlungsstellenseite gemeldeten Leitungsparameterinformationen und Erhalten einer Zeitmarke T2 einer Leitung; wobei die Zeitmarke T2 der Leitung das Größere von einem Zeit-STAMP-OLR-Parameter, wenn die Leitung online umkonfiguriert wird, und der Zeitmarke, wenn sich ein Betriebszustand der Teilnehmerleitung ändert, ist; und
   Vergleichen durch das Datenerfassungssystem des Zeitpunkts T1 mit der Zeitmarke T2 der Leitung und Sichern der empfangenen Leitungsparameterinformationen, falls der Zeitpunkt T1 größer als die Zeitmarke T2 der Leitung ist.

2. Verfahren nach Anspruch 1, wobei die Zeitmarke, wenn sich der Betriebszustand der Teilnehmerleitung ändert, der Zeitmarke entspricht, wenn der Betriebszustand der Teilnehmerleitung die letzte Änderung unter Bezugnahme auf den Zeitpunkt T1 erfährt.

3. Verfahren nach Anspruch 1 oder 2, wobei nach dem Senden der Anforderungsnachricht zum Erfassen der Leitungsparameter an die Zugangsvorrichtung der Vermittlungsstellenseite und vor dem Empfangen der durch die Zugangsvorrichtung der Vermittlungsstellenseite gemeldeten Leitungsparameterinformationen das Verfahren ferner Folgendes umfasst:

   Senden eines Befehls zum Erfassen der Zeitmarke, wenn sich der Betriebszustand der Leitung ändert, und erneutes Ausführen der Leitungsparametererfassung, falls eine durch die Zugangsvorrichtung der Vermittlungsstellenseite gemeldete Antwortnachricht empfangen wird; Empfangen der durch die Zugangsvorrichtung der Vermittlungsstellenseite gemeldeten Leitungsparameterinformationen, falls keine durch die Zugangsvorrichtung der Vermittlungsstellenseite gemeldete Antwortnachricht empfangen wird.

4. Verfahren nach Anspruch 1 oder 2, das ferner Folgendes umfasst:

   Aufzeichnen eines Zeitpunkts T3, zu dem die Zugangsvorrichtung der Vermittlungsstellenseite die Leitungsparameter meldet, und Sichern der durch die Zugangsvorrichtung der Vermittlungsstellenseite gemeldeten Leitungsparameterinformationen, falls T2 größer als T3 ist.

5. Vorrichtung für Leitungsparametererfassung, die Folgendes umfasst:

   ein Konfigurationsmodul (301), das konfiguriert ist, eine Anforderungsnachricht zu erzeugen, wobei die Anforderungsnachricht Leitungsinformationen und deren Parameterinformationen führt, die zu erfassen sind;
   ein Steuermodul (302), das konfiguriert ist, die durch das Konfigurationsmodul (301) erzeugte Anforderungsnachricht an eine Zugangsvorrichtung einer Vermittlungsstellenseite zu senden, einen Zeitpunkt T1, zu dem die Zugangsvorrichtung der Vermittlungsstellenseite das Erfassen von Leitungsparametern beginnt, aufzuzeichnen, durch die Zugangsvorrichtung der Vermittlungsstellenseite gemeldete Leitungsparameterinformationen zu empfangen und eine Zeitmarke T2 der Leitung zu erhalten; wobei die Zeitmarke T2 der Leitung das Größere von einem Zeit-STAMP-OLR-Parameter, wenn die Leitung online umkonfiguriert wird, und der Zeitmarke, wenn sich ein Betriebszustand der Teilnehmerleitung ändert, ist; und
   ein Bestimmungsmodul (303), das konfiguriert ist, den Zeitpunkt T1 mit der Zeitmarke T2 der Leitung zu vergleichen und die Leitungsparameterinformationen zu sichern, falls die Zeitmarke T2 kleiner als der Zeitpunkt T1 ist, oder die Leitungsparametererfassung erneut auszuführen, falls die Zeitmarke T2 nicht kleiner als der Zeitpunkt T1 ist.

6. Vorrichtung nach Anspruch 5, wobei:

   das Steuermodul (302) ferner konfiguriert ist, die durch die Zugangsvorrichtung der Vermittlungsstellenseite gemeldeten Leitungsparameterinformationen zu empfangen und einen Zeitpunkt T3, zu dem die Leitungsparametererfassung durch die Zugangsvorrichtung der Vermittlungsstellenseite abgeschlossen ist, aufzuzeichnen; und

das Bestimmungsmodul (303) ferner konfiguriert ist, den Zeitpunkt T1, die Zeitmarke T2 der Leitung und den Zeitpunkt T3 zu vergleichen und die Leitungsparameterinformationen zu sichern, falls T2 kleiner als T1 ist oder T2 größer als T3 ist, oder die Leitungsparametererfassung erneut auszuführen, falls T2 nicht kleiner als T1 ist und nicht größer als T3 ist.

**7.** Vorrichtung nach Anspruch 5 oder 6, die ferner Folgendes umfasst:

ein Speichermodul (304), das konfiguriert ist, die durch die Zugangsvorrichtung der Vermittlungsstellenseite gemeldeten Leitungsparameterinformationen zu speichern.

**8.** System für Leitungsparametererfassung, das eine Datenerfassungsvorrichtung (401) und eine Zugangsvorrichtung (402) einer Vermittlungsstellenseite umfasst, wobei:

die Datenerfassungsvorrichtung (401) konfiguriert ist: eine Anforderungsnachricht zu erzeugen, die Leitungsinformationen und deren Parameterinformationen führt, die zu erfassen sind, die Anforderungsnachricht an die Zugangsvorrichtung (402) der Vermittlungsstellenseite zu senden und einen Zeitpunkt T1, zu dem die Zugangsvorrichtung (402) der Vermittlungsstellenseite das Erfassen von Leitungsparametern beginnt, aufzuzeichnen; durch die Zugangsvorrichtung (402) der Vermittlungsstellenseite gemeldeten Leitungsparameterinformationen zu empfangen und eine Zeitmarke T2 der Leitung zu erhalten; wobei die Zeitmarke T2 der Leitung das Größere von einem Zeit-STAMP-OLR-Parameter, wenn die Leitung online umkonfiguriert wird, und der Zeitmarke, wenn sich ein Betriebszustand der Teilnehmerleitung ändert, ist; und den Zeitpunkt T1, zu dem sie die Anforderungsnachricht sendet, mit der Zeitmarke T2 der Leitung zu vergleichen und die durch die Zugangsvorrichtung (402) der Vermittlungsstellenseite gemeldeten Leitungsparameterinformationen zu sichern, falls die Zeitmarke T2 kleiner als der Zeitpunkt T1 ist, oder die Leitungsparametererfassung erneut auszuführen, falls die Zeitmarke T2 nicht kleiner als der Zeitpunkt T1 ist; und
die Zugangsvorrichtung (402) der Vermittlungsstellenseite konfiguriert ist: nach dem Empfangen der durch die Datenerfassungsvorrichtung (401) gesendeten Anforderungsnachricht die Parametererfassung an der Leitung in Übereinstimmung mit den Informationen in der Anforderungsnachricht auszuführen und die erfassten Parameter der Datenerfassungsvorrichtung (401) zu melden.

**9.** System nach Anspruch 8, wobei:

die Datenerfassungsvorrichtung (401) ferner konfiguriert ist: die durch die Zugangsvorrichtung (402) der Vermittlungsstellenseite gemeldeten Leitungsparameterinformationen zu empfangen und einen Zeitpunkt T3, zu dem die Leitungsparametererfassung durch die Zugangsvorrichtung (402) der Vermittlungsstellenseite abgeschlossen ist, aufzuzeichnen, den Zeitpunkt T1, die Zeitmarke T2 der Leitung und den Zeitpunkt T3, zu dem die Leitungsparametererfassung abgeschlossen ist, zu vergleichen und die Leitungsparameterinformationen zu sichern, falls T2 kleiner als T1 ist oder T2 größer als T3 ist, oder die Leitungsparametererfassung erneut auszuführen, falls T2 nicht kleiner als T1 ist und nicht größer als T3 ist.

## Revendications

**1.** Procédé d'acquisition de paramètres de ligne, comprenant :

la transmission, par un système d'acquisition de données, d'un message de requête d'acquisition de paramètres de ligne auprès d'un appareil d'accès extrémité central, et
l'obtention d'un temps T1 quand l'acquisition de paramètres de ligne a commencé ;
la réception, par le système d'acquisition de données, d'informations de paramètres de ligne déclarées par l'appareil d'accès extrémité central, et l'obtention d'un repère temporel T2 d'une ligne ; le repère temporel T2 de la ligne étant la valeur la plus élevée d'un paramètre temporel STAMP-OLR quand la ligne est reconfigurée en ligne et du repère temporel quand un état opérationnel de la ligne d'abonné change ; et
la comparaison, par le système d'acquisition de données, du temps T1 au repère temporel T2 de la ligne, et la sauvegarde des informations de paramètres de ligne reçues si le temps T1 est supérieur au repère temporel T2 de la ligne.

**2.** Procédé selon la revendication 1, dans lequel le repère temporel quand l'état opérationnel de la ligne d'abonné change correspond au repère temporel quand l'état opérationnel de la ligne d'abonné subit le dernier changement

relativement au temps T1.

**3.** Procédé selon la revendication 1 ou 2, comprenant en outre après la transmission du message de requête d'acquisition des paramètres de ligne auprès de l'appareil d'accès extrémité central et avant la réception des informations de paramètres de ligne déclarées par l'appareil d'accès extrémité central :

la transmission d'une commande d'acquisition du repère temporel quand l'état opérationnel de la ligne change, et l'exécution à nouveau de l'acquisition de paramètres de ligne si un message de réponse déclaré par l'appareil d'accès extrémité central est reçu ; la réception des informations de paramètres de ligne déclarées par l'appareil d'accès extrémité central si aucun message de réponse déclaré par l'appareil d'accès extrémité central n'est reçu.

**4.** Procédé selon la revendication 1 ou 2, comprenant en outre :

l'enregistrement d'un temps T3 quand l'appareil d'accès extrémité central déclare les paramètres de ligne, et la sauvegarde des informations de paramètres de ligne déclarées par l'appareil d'accès extrémité central si T2 est supérieur à T3.

**5.** Appareil d'acquisition de paramètres de ligne, comprenant :

un module de configuration (301), configuré pour générer un message de requête, le message de requête comportant des informations de ligne et des informations de paramètres de cette ligne à acquérir ;
un module de commande (302), configuré pour transmettre le message de requête généré par le module de configuration (301) à un appareil d'accès extrémité central, enregistrer un temps T1 quand l'appareil d'accès extrémité central commence l'acquisition de paramètres de ligne, recevoir des informations de paramètres de ligne déclarées par l'appareil d'accès extrémité central, et obtenir un repère temporel T2 de la ligne ; le repère temporel T2 de la ligne étant la valeur la plus élevée d'un paramètre temporel STAMP-OLR quand la ligne est reconfigurée en ligne et du repère temporel quand un état opérationnel de la ligne d'abonné change ; et
un module de détermination (303), configuré pour comparer le temps T1 au repère temporel T2 de la ligne, et sauvegarder les informations de paramètres de ligne si le repère temporel T2 est inférieur au temps T1 ou exécuter à nouveau l'acquisition de paramètres de ligne si le repère temporel T2 n'est pas inférieur au temps T1.

**6.** Appareil selon la revendication 5, dans lequel :

le module de commande (302) est configuré en outre pour recevoir les informations de paramètres de ligne déclarées par l'appareil d'accès extrémité central et enregistrer un temps T3 quand l'acquisition de paramètres de ligne par l'appareil d'accès extrémité central est finie ; et
le module de détermination (303) est configuré en outre pour comparer le temps T1, le repère temporel T2 de la ligne, et le temps T3, et sauvegarder les informations de paramètres de ligne si T2 est inférieur à T1 ou T2 est supérieur à T3, ou exécuter à nouveau l'acquisition de paramètres de ligne si T2 n'est pas inférieur à T1 et pas supérieur à T3.

**7.** Appareil selon la revendication 5 ou 6, comprenant en outre :

un module de mémorisation (304), configuré pour mémoriser les informations de paramètres de ligne déclarées par l'appareil d'accès extrémité central.

**8.** Système d'acquisition de paramètres de ligne, comprenant un appareil d'acquisition de données (401) et un appareil d'accès extrémité central (402), dans lequel :

l'appareil d'acquisition de données (401) est configuré pour : générer un message de requête qui comporte des informations de ligne et des informations de paramètres de cette ligne à acquérir, transmettre le message de requête à l'appareil d'accès extrémité central (402), et enregistrer un temps T1 quand l'appareil d'accès extrémité central (402) commence l'acquisition de paramètres de ligne ; recevoir des informations de paramètres de ligne déclarées par l'appareil d'accès extrémité central (402), et obtenir un repère temporel T2 de la ligne ; le repère temporel T2 de la ligne étant la valeur la plus élevée d'un paramètre temporel STAMP-OLR quand la ligne est reconfigurée en ligne et du repère temporel quand un état opérationnel de la ligne d'abonné change ; et comparer le temps T1 quand il transmet le message de requête avec le repère temporel T2 obtenu de la ligne, et sauvegarder les informations de paramètres de ligne déclarées par l'appareil d'accès extrémité central (402) si le repère temporel T2 est inférieur au temps T1 ou exécuter à nouveau l'acquisition de paramètres de ligne si le repère temporel T2 n'est pas inférieur au temps T1 ; et

l'appareil d'accès extrémité central (402) est configuré pour : après la réception du message de requête transmis par l'appareil d'acquisition de données (401), exécuter l'acquisition de paramètres sur la ligne en fonction des informations dans le message de requête, et déclarer les paramètres acquis à l'appareil d'acquisition de données (401).

**9.** Système selon la revendication 8, dans lequel :

l'appareil d'acquisition de données (401) est configuré en outre pour : recevoir les informations de paramètres de ligne déclarées par l'appareil d'accès extrémité central (402), et enregistrer un temps T3 quand l'acquisition de paramètres de ligne par l'appareil d'accès extrémité central (402) est finie, comparer le temps T1, le repère temporel T2 de la ligne, et le temps T3 quand l'acquisition de paramètres de ligne est finie, et sauvegarder les informations de paramètres de ligne si T2 est inférieur à T1 ou T2 est supérieur à T3, ou exécuter à nouveau l'acquisition de paramètres de ligne si T2 n'est pas inférieur à T1 et pas supérieur à T3.

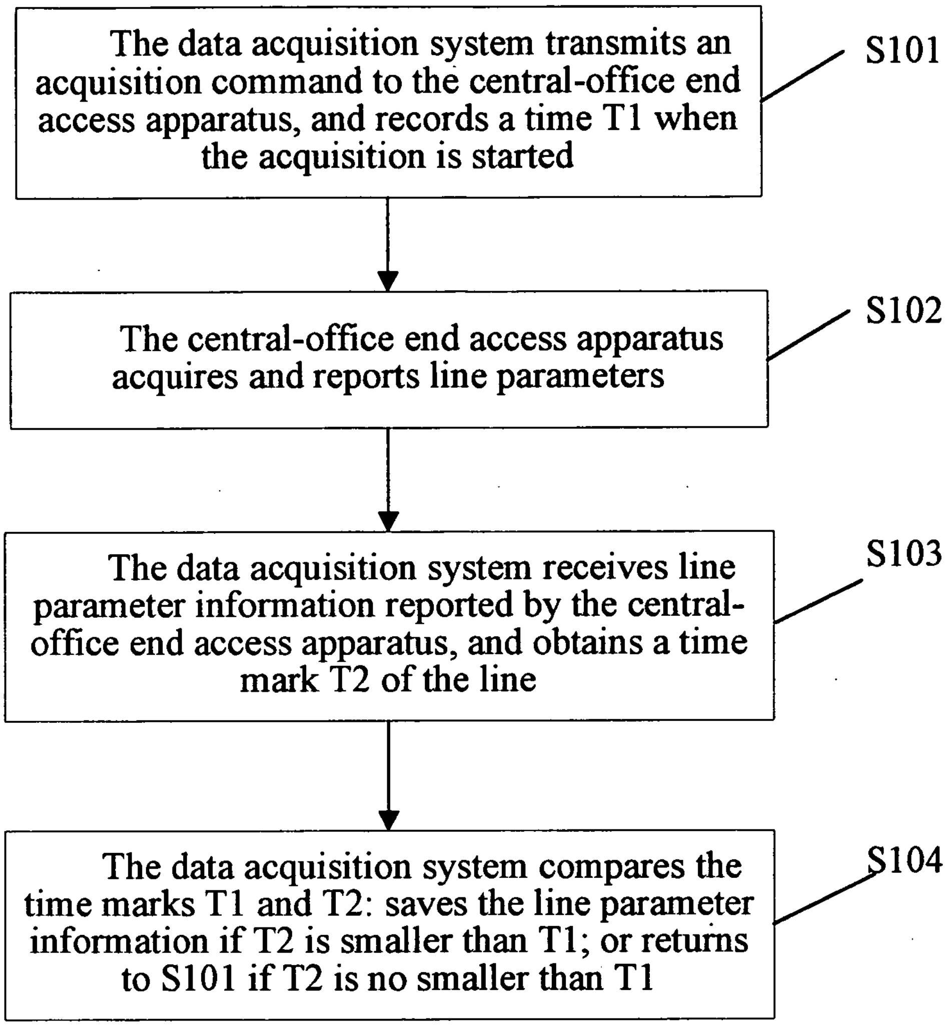
The data acquisition system transmits an acquisition command to the central-office end access apparatus, and records a time T1 when the acquisition is started
S101
The central-office end access apparatus acquires and reports line parameters
S102
The data acquisition system receives line parameter information reported by the central-office end access apparatus, and obtains a time mark T2 of the line
S103
The data acquisition system compares the time marks T1 and T2: saves the line parameter information if T2 is smaller than T1; or returns to S101 if T2 is no smaller than T1
S104

FIG. 1

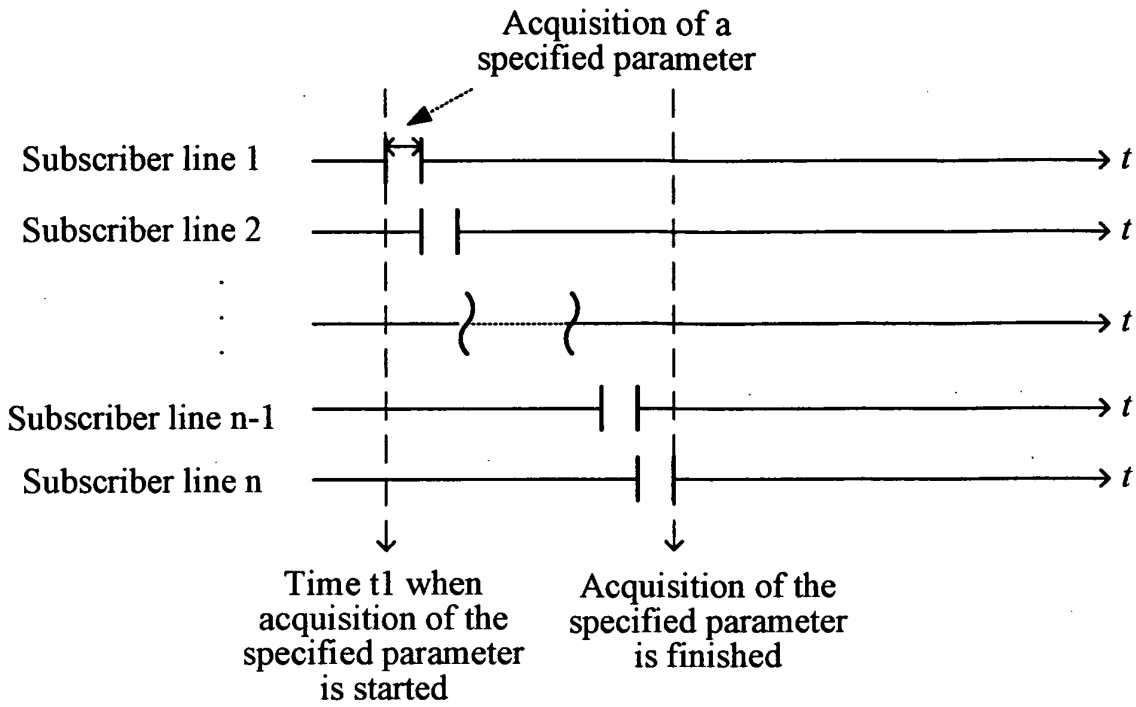


FIG. 2

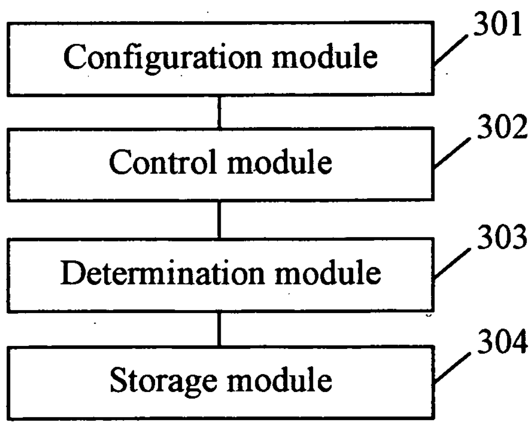


FIG. 3

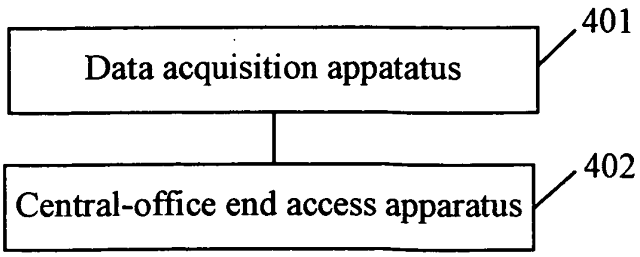


FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- gen: G.vdsl: G.ploam: Self-consistent Parameter Group; 08AB-059. *ITU_T DRAFTS; STUDY PERIOD 2005-2008, INTERNATIONAL TELECOMMUNICATION UNION,* 24 June 2008
- **MEHDI MOHSENI et al.** G.ploam, G.vdsl: Self-consistent Parameter Groups. *ITU_T DRAFTS; STUDY PERIOD 2005-2008, INTERNATIONAL TELECOMMUNICATION UNION,* 01 May 2007
- G.gen: G.ploam: G.vdsl: Self-consistent Parameter Groups; BF-083. *ITU_T DRAFTS; STUDY PERIOD 2005-2008, INTERNATIONAL TELECOMMUNICATION UNION,* 03 December 2007